# EUROPEAN PATENT SPECIFICATION

(11) **EP 3 604 095 B1**
(45) Date of publication and mention of the grant of the patent: **24.03.2021**
(21) Application number: 17903642.1
(22) Date of filing: 30.03.2017
(51) Int. Cl.: B62J 9/00, B62J 11/00, B62J 43/16, B62J 43/20, B62J 9/14, B62J 9/40, B60K 1/04

(54) **BATTERY SUPPORT STRUCTURE FOR SADDLE-TYPE VEHICLE**
BATTERIETRÄGERSTRUKTUR FÜR SATTELFAHRZEUG
STRUCTURE DE SUPPORT DE BATTERIE POUR VÉHICULE DU TYPE À SELLE

(43) Date of publication of application: 05.02.2020
(73) Proprietor: Honda Motor Co., Ltd., Tokyo 107-8556 (JP)
(72) Inventor: SUZUKI, Shota, Wako-shi Saitama 351-0193 (JP); TSUDA, Haruka, Wako-shi Saitama 351-0193 (JP)
(74) Representative: Beder, Jens
(86) International application number: PCT/JP2017/013479
(87) International publication number: WO 2018/179297

(56) References cited:
- JP-A- S57 961
- JP-A- H10 181 650
- JP-A- 2007 320 533
- JP-A- 2012 144 178
- JP-A- 2012 197 074
- JP-A- 2016 030 581
- JP-A- 2016 179 793
- JP-U- S6 268 886
- JP-U- S60 125 281

## Description

The present invention relates to a battery support structure for a saddle-type vehicle, and in particular, to the structure that allows a battery to be detachably attached to the vehicle in a vehicle-width direction.

JP 2010-120626 A describes a battery support structure for a saddle-type vehicle. In this structure, a storage case that is opened upward is disposed below a seat. The storage case is divided into three compartments: an upper compartment, a middle compartment, and a lower compartment. The lower compartment houses a battery, the middle compartment houses a GPS unit, and the upper compartment houses small articles, such as a raincoat and tools. In another known structure, a battery is inserted or removed from one side of a vehicle. In this structure, a storage box is divided into two compartments in a vertical direction, for example; and disposed below a seat. The storage box houses a battery case that can slide with respect to the storage box. The battery case houses a battery that has electrode terminals disposed in the vehicle-width direction. On the top of the storage box, an electrical component is disposed. The electrical component is supported by the storage box via an electrical component stay. On the lower surface of the bottom of the storage box, a heat shield plate is disposed for shielding heat from the engine. In addition, a tool box is disposed on one side of the storage box in the slide direction of the battery case. The tool box is fixed to a vehicle-body frame via a metal tool-box band. Moreover, an inner lid is formed between the tool box and the battery case, integrally with the storage box. The inner lid separates metal tools and battery electrodes from each other so that the metal tools and the battery electrodes do not contact each other. When maintenance is performed on the battery, the tool box band is separated from the tool box, then the tool box is removed, then the inner lid is opened, and then the battery case and the battery are slid toward one side of the vehicle body to pull out the battery.

In the configuration described in JP 2010-120626 A, when the battery and the electrical component such as the GPS unit are attached or detached, it is necessary to remove the small articles and the electrical component in addition to disconnecting cables from the electrical component. Thus, the work will take time. In addition, the capacity of the small-article storage unit is limited by the seat, which is disposed above the small-article storage unit. Thus, it is desired that the small-article storage unit is disposed by effectively using space. Furthermore, in the configuration in which the battery case can slide, although the tool box is disposed adjacent to a side surface of the battery case, the tool box is not supported by the battery case, but independently fixed to the vehicle-body frame. Since the tool box that contains tools is heavy, the tool box is fixed to the vehicle-body frame via a strong tool-box band that is made of metal, for example. As a result, the number of components and the weight increase. Thus, it is also desired that the need for the tool box band is eliminated.

A battery support structure, in which all features of the preamble of claim 1 are disclosed, is described in JP S62 68886 U.

It is an object of the present invention to provide a battery support structure for a saddle-type vehicle, in which the tool box is safely and efficiently arranged.

This object is achieved by a battery support structure according to the enclosed independent claim 1. Advantageous features of the present invention are defined in the corresponding subclaims.

In the present invention, the battery case is disposed such that the longitudinal direction of the battery case is equal to the vehicle-width direction; the side opening is opened toward one direction in the vehicle-width direction; the battery case is disposed such that the battery is detachably attached to the battery case along the vehicle-width direction; a storage case is disposed on the side opening side of the battery case and adjacent to the battery; the storage case includes a storage case body and a lid and is configured to contain a tool; a side wall of the storage case fits in the side opening of the battery case, and protrudes inward into the battery case from the side opening to serve as an abutment portion that abuts against the battery such that the battery is prevented from moving toward a direction in which the battery is removed. Thus, the battery can be prevented by the storage case, from moving toward a direction in which the battery is removed.

Further, even when the vehicle-body frame, disposed above the battery case, causes insufficient storage space formed above the battery case, the storage case can be disposed in a space formed on the side opening side of the battery case. The space can be an article storage space that is not limited by the vehicle-body frame. Thus, the storage case can be disposed by effectively using space. In addition, the storage case can be increased in capacity because one portion of the storage case fits in the battery case, and can be increased in stiffness because the storage case is reinforced by the battery case. Furthermore, since the battery is prevented by the storage case from moving, the need for the special member such as a holding band to hold the battery and the special member (such as a tool box band) to fix the storage case can be eliminated. As a result, the number of components and the weight can be reduced.

### BRIEF DESCRIPTION OF DRAWINGS

FIG. 1 is a side view of a motorcycle to which the present invention is applied.
FIG. 2 is a perspective view of a battery case and a tool box separated from each other.
FIG. 3 is a diagram to assemble assemblies of the battery case and the tool box.
FIG. 4 is a perspective view in which a battery storage unit and its surroundings are cut.
FIG. 5 is a plan view of the battery storage unit and its surroundings.
FIG. 6 is a cross-sectional view taken along a line 6-6 of FIG. 5.
FIG. 7 is a side view that illustrates a lid of the tool box mounted on a vehicle body.
FIG. 8 is a diagram in which the tool box is removed in FIG. 7, and which illustrates the interior of the battery case.
FIG. 9 is a cross-sectional view taken along a line 9-9 of FIG. 5.
FIG. 10 is a perspective view illustrating a state where a top portion of an electrical component stay is attached to the battery case.
FIG. 11 is a perspective view illustrating a state where an ECU is attached to the electrical component stay.
FIG. 12 is a perspective view illustrating a state where the tool box is fitted in the battery case.

### DETAILED DESCRIPTION

Hereinafter, one embodiment will be described with reference to the accompanying drawings. Here, directions including a front-and-rear direction and a right-and-left direction are defined with respect to a vehicle to which the present invention is applied. In addition, in some figures that need directions, the front direction is indicated by an arrow Fr, the rear direction is indicated by an arrow Rr, the left direction is indicated by an arrow LH, and the right direction is indicated by an arrow RH. The right-and-left direction is equal to the vehicle-width direction.

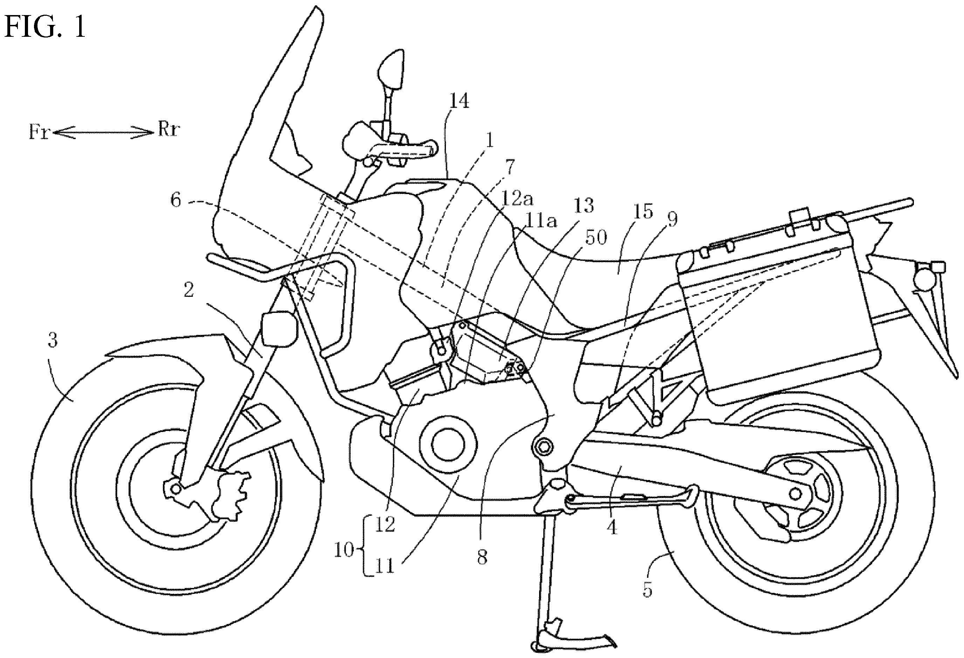

As illustrated in FIG. 1, in a motorcycle (saddle-type vehicle) to which the present invention is applied, a front wheel 3 is supported by a vehicle-body frame 1 via a front fork 2, and a rear wheel 5 is supported by the vehicle-body frame 1 via a rear swing arm 4. The vehicle-body frame 1 includes a main frame 7, a pivot frame 8, and a seat rail 9. The main frame 7 extends diagonally downward in the rear direction, from a head pipe 6 that supports an upper portion of the front fork 2. The pivot frame 8 extends downward from a rear portion of the main frame 7. The seat rail 9 extends diagonally downward in the rear direction, from an upper end of the main frame 7. Each of the main frame 7, the pivot frame 8, and the seat rail 9 is constituted by a pair of elements formed in the right-and-left direction.

Below the main frame 7, an engine 10 is supported. The engine 10 includes a crank case 11 and a cylinder 12. The cylinder 12 extends diagonally upward in the front direction, from a front portion of the crank case 11. In the side view of the vehicle of FIG. 1, a tool box 13 is disposed in a space formed behind the cylinder 12, and surrounded by the main frame 7, the pivot frame 8, and the crank case 11. The space is a dead space formed behind the cylinder 12.

The tool box 13 is a storage case of the present invention. On the back side in the vehicle-width direction, a battery case and a battery are disposed behind the tool box 13, although not illustrated in FIG. 1. That is, the battery and the tool box 13 are disposed adjacent to each other in the vehicle-width direction; and the battery case, the battery, and the tool box 13 are disposed in the above-described dead space.

A fuel tank 14 is disposed above the engine 10 and the tool box 13, and a seat 15 is disposed behind the fuel tank 14. The seat 15 is supported by the seat rail 9, and the seat 15 is generally positioned on the rear side with respect to the pivot frame 8.

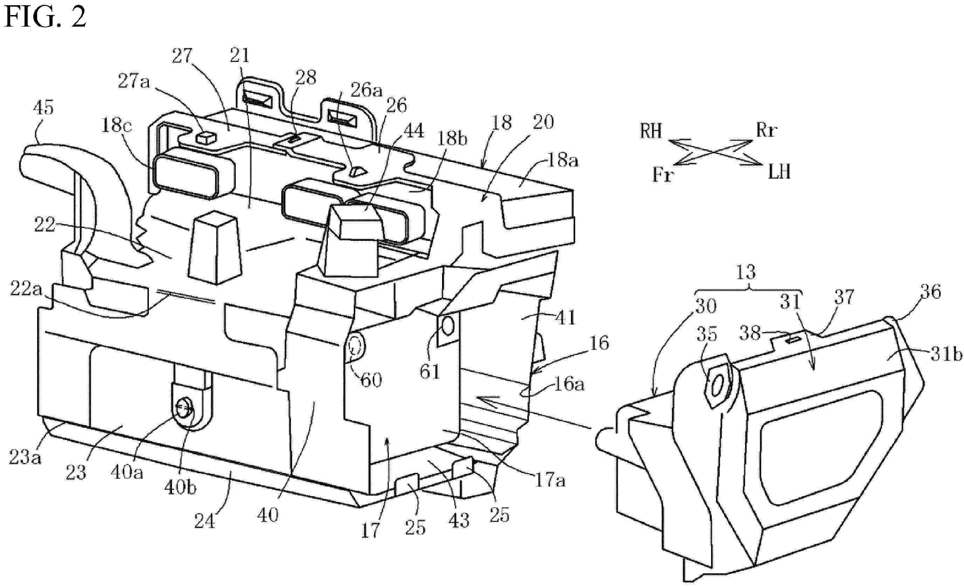

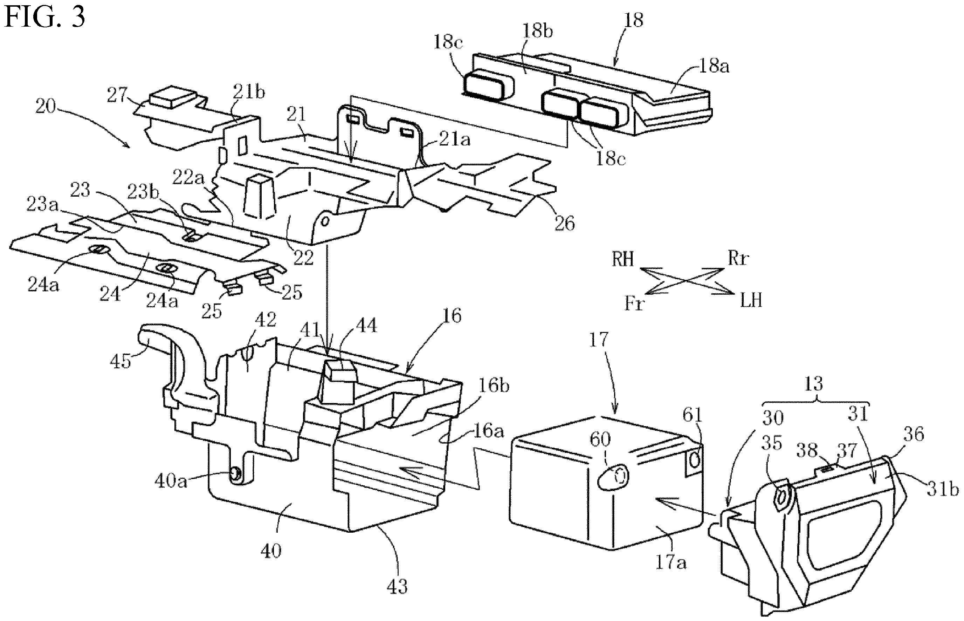

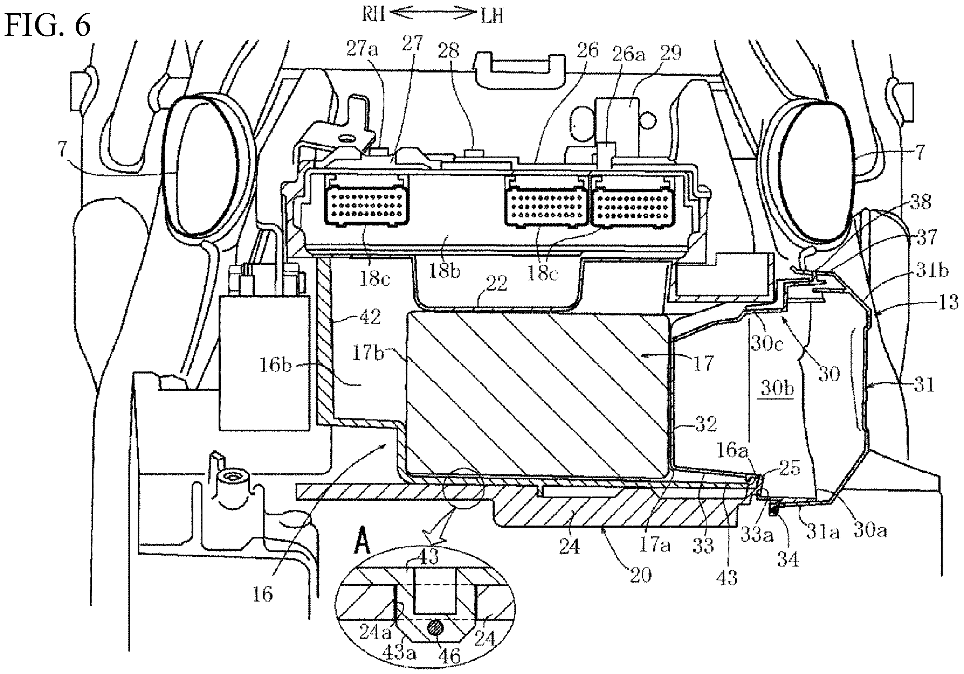

Hereinafter, the arrangement of the battery and the tool box 13 that are adjacent to each other will be described in detail. FIG. 2 is a perspective view illustrating the battery case 16 and the tool box 13 separated from each other. In FIG. 2, the battery case 16 has a side opening 16a on the left side of the battery case 16, and is disposed such that the longitudinal direction of the battery case 16 is equal to the vehicle-width direction. A box body 30 of the tool box 13 is inserted into an inner storage space 16b (see FIG. 3) from the left side of the vehicle, through the side opening 16a. The tool box 13 includes the box body 30 and a lid 31. The lid 31 is used to open or close an opening 30a (see FIG. 6) of the box body 30, which is opened leftward.

The battery case 16 houses a battery 17. The battery 17 can be attached to or detached from the battery case 16 along the vehicle-width direction, through the side opening 16a of the battery case 16. That is, the battery 17 is pushed from the left side toward the right side of the battery case 16 when attached, and is drawn toward the left side of the battery case 16 when detached. Thus, the battery 17 can be attached to or detached from the battery case 16 in the vehicle-width direction. The left direction of the vehicle-width direction is a direction in which the battery is removed.

On the left side surface of the battery 17, a positive electrode 60 and a negative electrode 61 are disposed. When the battery 17 is housed in the battery case 16, the positive electrode 60 and the negative electrode 61 are exposed from the battery case 16, allowing a user to handle the electrodes from the left side. The positive electrode 60 is covered with a cover. Above the battery case 16, an electronic control unit (hereinafter referred to as an ECU) 18 is disposed and fixed by an electrical component stay 20. The ECU 18 is a computer to control components, such as an engine.

FIG. 3 is an exploded perspective view of the tool box 13, the battery case 16, and components to be attached to the battery case 16. As illustrated in FIG. 3, the battery case 16 is a box-like resin member whose upper portion and left portion are open. The battery case 16 includes a front wall 40, a rear wall 41, a side wall 42, and a bottom wall 43. The left side of the battery case 16 is the side opening 16a, and the inside of the battery case 16 is the storage space 16b for the battery 17. The right side of the storage space 16b is closed by the side wall 42. On the right and left portions above the front wall 40, mounting arms 45 and 44 are respectively formed so as to extend diagonally upward. At or around the center of the front wall 40, a locking projection 40a is formed integrally with the front wall 40, so as to extend frontward.

The ECU 18 is a flat, substantially rectangular parallelepiped; and includes a body 18a and a connector 18c. When viewed in a plan view, the body 18a is rectangular and elongated in the vehicle-width direction. The connector 18c is mounted on a front surface 18b of the body 18a. The ECU 18 is one example of electrical components of the present invention. The ECU 18 is supplied with electric power from the battery 17, to control other components, such as an ignition device and a fuel injection device (not illustrated) mounted on the vehicle and connected to the ECU 18 via the connector 18c.

The electrical component stay 20 is made of resin. In FIG. 3, the electrical component stay 20 is unfolded. The electrical component stay 20 includes a top portion, a front portion 23, and a bottom portion 24 formed integrally with each other. The top portion covers the upper opening of the battery case 16, the front portion 23 covers the front wall 40, and the bottom portion 24 covers the bottom wall 43. The bottom portion 24 has a claw 25 formed at the left edge of the bottom portion 24. When the unfolded electrical component stay 20 is bent at appropriate portions, the electrical component stay 20 is attached to the battery case 16 so as to wind around the battery case 16. After attached to the battery case 16, the electrical component stay 20 that covers the periphery of the battery case 16 serves as a heat shield plate.

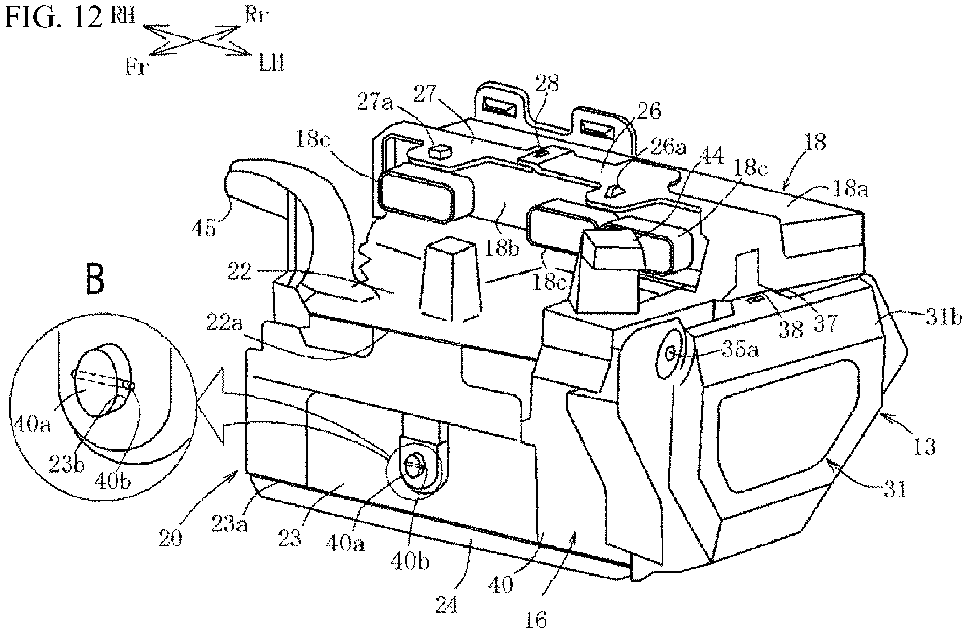

At or around the center of the front portion 23 of the electrical component stay 20, an engagement hole 23b is formed to engage with the locking projection 40a of the front wall 40 of the battery case 16. When the front portion 23 is placed on the front wall 40 of the battery case 16, the locking projection 40a passes through the engagement hole 3b, and a pin 40b is inserted from a side surface of the locking projection 40a so as to pass through the locking projection 40a (see an enlarged portion B of FIG. 12). Then, the locking projection 40a engages with the engagement hole 23b of the front portion 23, and is pin-locked. Thus, the front wall 40 of the battery case 16 engages and joins with the front portion 23 of the electrical component stay 20 via the locking projection 40a. On the right and left sides of the bottom portion 24 with respect to the center of the bottom portion 24, engagement holes 24a are formed to engage with locking projections 43a of the bottom wall 43 of the battery case 16 (see an enlarged portion A of FIG. 6).

The top portion of the electrical component stay 20 includes an ECU support portion 21, a battery holding portion 22, a left-side holding portion 26, and a right-side holding portion 27. The ECU support portion 21 supports the ECU 18. The battery holding portion 22 is formed adjacent to the ECU support portion 21 in the front direction, and is one step lowered than the ECU support portion 21 so as to protrude downward. The left-side holding portion 26 and the right-side holding portion 27 are disposed, extending outward in the right-and-left direction from the ECU support portion 21.

The front portion 23 is bent downward at a front edge 22a of the battery holding portion 22, and the bottom portion 24 is bent rearward at a lower edge 23a of the front portion 23 so that the bottom portion 24 becomes substantially horizontal. The left-side holding portion 26 is folded at a left edge 21a of the ECU support portion 21 so that the left-side holding portion 26 is placed on the ECU support portion 21. The right-side holding portion 27 is folded at a right edge 21b of the ECU support portion 21 so that the right-side holding portion 27 is placed on the ECU support portion 21.

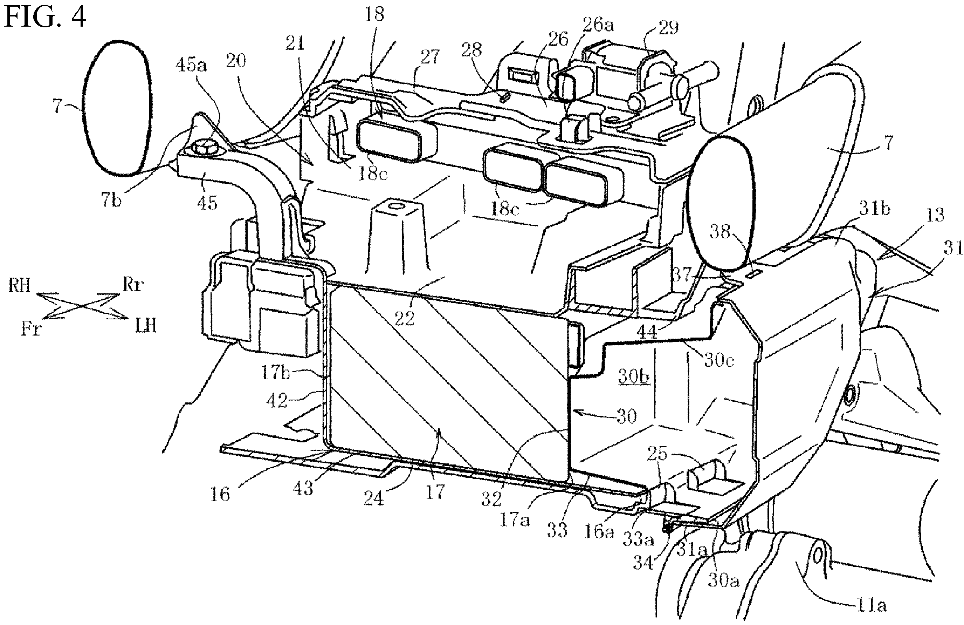

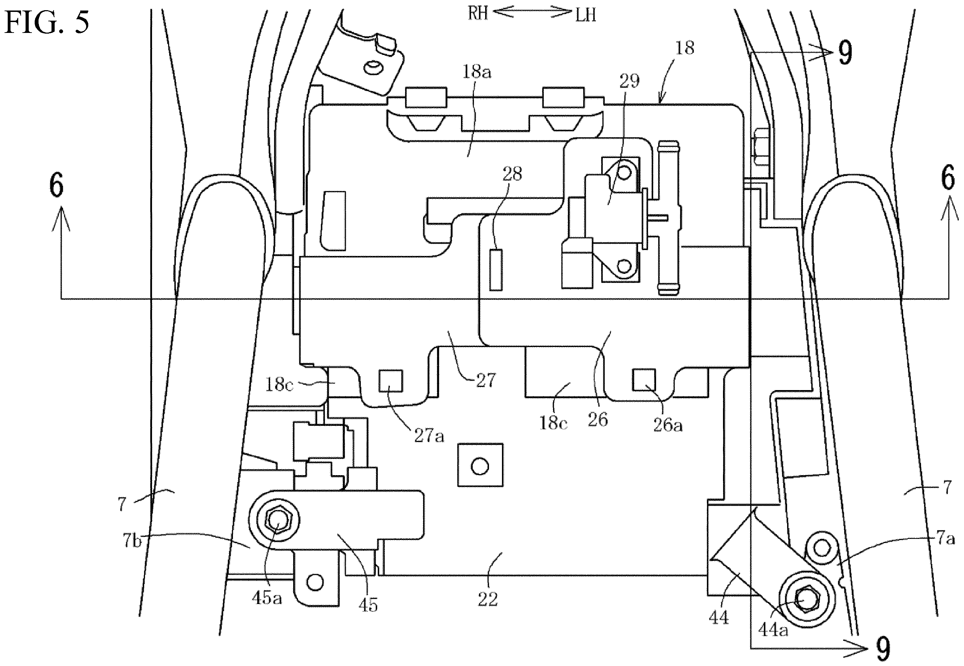

FIG. 4 is a perspective view in which the battery case 16 (in addition to the battery 17, the ECU 18, and the electrical component stay 20) and the tool box 13 are cut. FIG. 5 is a plan view of the battery case 16 (in addition to the battery 17, the ECU 18, and the electrical component stay 20) and the tool box 13. FIG. 6 is a cross-sectional view taken along a line 6-6 of FIG. 5.

In FIGS. 4 to 6, the battery case 16 is disposed between the right and left elements of the pair of the main frame 7, with the longitudinal direction of the battery case 16 being equal to the vehicle-width direction. In addition, the battery case 16 is fixed to the right and left battery 17 via the right and left mounting arms 45 and 44. The mounting arm 44 is fixed, via a bolt 44a, to a bracket 7a formed on the left element of the main frame 7 (FIG. 5). The mounting arm 45 is fixed, via a bolt 45a, to a bracket 7b formed on the right element of the main frame 7.

As illustrated in FIGS. 4 and 6, the battery case 16 has the side wall 42 on the right side of the battery case 16, and a right side surface 17b of the battery 17 abuts against the side wall 42 of the battery case 16. The battery holding portion 22 protrudes from the upper opening of the battery case 16 into the storage space 16b, and presses the top surface of the battery 17 to fix the battery 17. A left side surface 17a of the battery 17 is fixed by the box body 30 of the tool box 13.

The box body 30 is a cylindrical member made of resin. The left end of the box body 30 is opened, serving as the opening 30a; and the right end of the box body 30 is closed, forming the side wall 32. The side wall 42 presses the left side surface 17a of the battery 17 toward the right direction, and the battery 17 is fixed between the side wall 42 and the side wall 32. The opening 30a is located at the left end of the box body 30 in the vehicle-width direction, and the side wall 32 is located inside with respect to the opening 30a. The box body 30 protrudes from the side opening 16a of the battery case 16 toward the left side of the vehicle. A lower wall 33 of the box body 30 has a cutout 33a formed in the vicinity of the side opening 16a. The cutout 33a engages with the claw 25 of the bottom portion 24 of the electrical component stay 20, which covers the bottom wall 43 of the battery case 16.

On the opening 30a side with respect to the cutout 33a, the lower surface of the lower wall 33 is joined with the lower surface of an edge portion of a lower wall 31a of the lid 31, via a hinge 34. Thus, the lid 31 pivots upward or downward on the hinge 34, to open or close the tool box 13. As illustrated in FIG. 4, a projection 11a of the crank case 11, disposed below the lid 31, is close to the hinge 34. However, the lid 31 pivots on the hinge 34, and can be sufficiently opened toward the downward direction, without interfering with the projection 11a.

An upper portion 31b of the lid 31 is provided with a claw 37, which is bent at the upper portion 31b and protrudes inward. The claw 37 has an engagement hole formed therein. When the engagement hole of the claw 37 engages with a locking projection 38 (protruding upward in the vicinity of the opening 30a) of an upper wall 30c of the box body 30 (see FIG. 6), the claw 37 is locked by the locking projection 38 of the box body 30 at the upper portion of the box body 30 and in the vicinity of the opening 30a. When the claw 37 locked by the locking projection 38 is unlocked, the lid 31 can be opened downward.

The ECU 18 is fixed onto the ECU support portion 21 as follows: the body 18a is placed on the ECU support portion 21, then the left-side holding portion 26 and the right-side holding portion 27 are folded and placed on the ECU support portion 21, and then the left-side holding portion 26 and the right-side holding portion 27 are engaged and joined with each other via an engagement portion 28 (FIG. 5). The engagement portion 28 is constituted by a locking projection formed on one of the left-side holding portion 26 and the right-side holding portion 27 and an engagement hole formed in the other of the left-side holding portion 26 and the right-side holding portion 27. Thus, when the one of the left-side holding portion 26 and the right-side holding portion 27 is placed on the other, the left-side holding portion 26 and the right-side holding portion 27 engage and join with each other.

Since the battery holding portion 22 and the ECU support portion 21 form a step such that the battery holding portion 22 is one step lower than the ECU support portion 21, the connector 18c is located above the battery holding portion 22, and a space is formed in front of the connector 18c. Thus, a cable can be connected to the connector 18c through the space formed above the battery holding portion 22. In addition, another connector 29 is attached to the top surface of the left-side holding portion 26 that is holding the ECU 18. Thus, another cable, other than the cable connected to the ECU 18, is connected to the connector 29.

The enlarged portion A of FIG. 6 illustrates the engagement between the bottom wall 43 of the battery case 16 and the bottom portion 24 of the electrical component stay 20. The bottom wall 43 of the battery case 16 has the locking projections 43a formed at positions corresponding to positions of the engagement holes 24a. The locking projections 43a are formed integrally with the bottom wall 43, and protrude downward. Thus, the locking projections 43a engage with the engagement holes 24a of the bottom portion 24. When the locking projections 43a pass through the engagement holes 24a, and then a pin 46 is inserted from a side surface of each locking projection 43a so as to pass therethrough, the locking projections 43a engage with the engagement holes 24a of the bottom portion 24, and are pin-locked. Thus, the bottom wall 43 of the battery case 16 engages and joins with the bottom portion 24 of the electrical component stay 20 via the locking projections 43a. Here, although the locking projections 43a are illustrated in the enlarged portion A, they are not illustrated in the cross-sectional view of the battery case 16 of FIG. 6 (except the enlarged portion A).

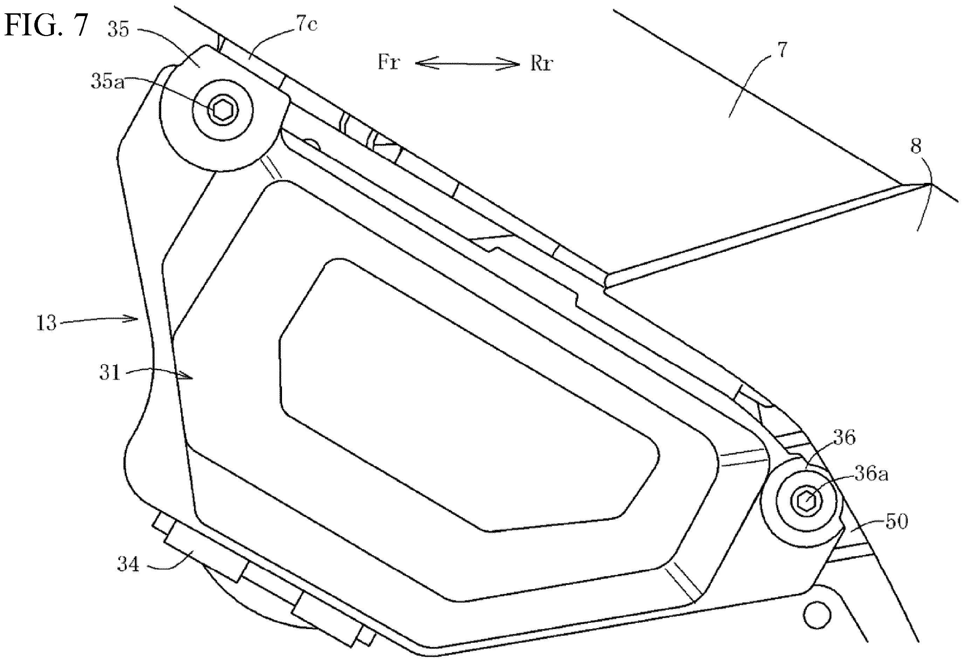

FIG. 7 is an enlarged view of the lid 31, as viewed from the left direction, for illustrating how the lid 31 is mounted. The lid 31 is formed like a trapezoid that is turned upside down. In addition, for making the front portion of the lid 31 higher and the rear portion of the lid 31 lower, the lid 31 is disposed diagonally along the lower surface of the main frame 7, which is disposed diagonally upward in the front direction as viewed in a side view.

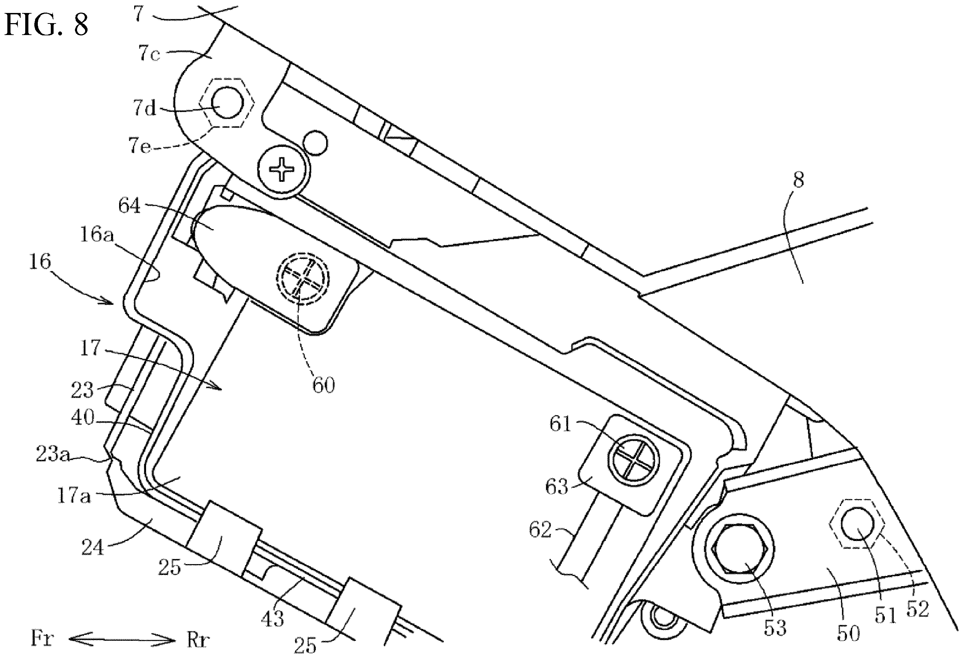

A front-side upper portion 35 of the lid 31 is fixed, via a bolt 35a, to a stay 7c (see FIG. 8) that extends downward from the main frame 7. A rear-side upper portion 36 is fixed, via a bolt 36a, to an engine hanger stay 50. With this configuration, the lid 31 is fixed to the vehicle-body frame via the bolts 35a and 36a.

When the lid 31 is fixed to the vehicle-body frame, the whole of the tool box 13 is fixed to the vehicle-body frame. Thus, the tool box 13 fixes the battery 17 so that the battery 17 does not move leftward in the vehicle-width direction. As a result, the need for any dedicated fixing member for the battery 17, such as the holding band, can be eliminated.

In addition, since the box body 30 is fitted in and supported by the battery case 16 (see FIG. 6), the tool box 13 can be fixed by only the bolts 35a and 36a, which fix the tool box 13 in the vehicle-width direction. As a result, the need for the dedicated heavy tool box band to fix the tool box can be eliminated, and the number of components and the weight can be reduced.

When the bolts 35a and 36a are removed, the lid 31 can pivot on the hinge 34. When the lid 31 is opened, the opening 30a is opened, and tools or the like (not illustrated) can be put in or taken out of the storage space 30b. Here, articles contained in the storage space 30b are non-electrical components, which are not intended to be connected to other components (disposed outside the storage space 30b) via cables. That is, the non-electrical components such as tools are not intended to be connected to other components disposed outside the tool box 13, but intended to be used alone.

Thus, the non-electrical components can be freely put in or taken out of the storage space 30b, without connecting or disconnecting cables. In addition, when the bolts 35a and 36a are removed, not only the lid 31 can be opened, but also the box body 30 can be drawn outward from the side opening 16a. Thus, the whole of the tool box 13 can be removed to open the side opening 16a of the battery case 16, so that maintenance can be performed on the battery 17 and the battery 17 can be taken out.

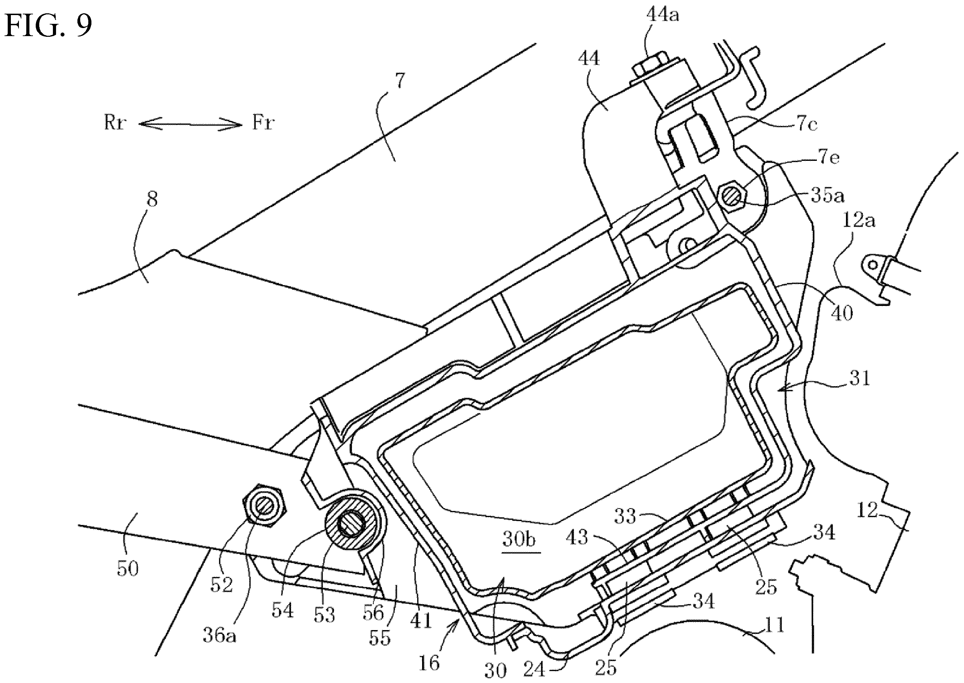

FIG. 8 illustrates a state where the tool box 13 is removed. When the lid 31 is opened, or the tool box 13 is removed, a stay 7c and an engine hanger stay 50 are exposed to the outside. The stay 7c has a substantially L-shaped form, and a through-hole 7d for the bolt 35a is formed in the stay 7c. A nut 7e is put on the back side of the mounting member 7d (FIG. 9), and the bolt 35a is tightened into the nut 7e.

The engine hanger stay 50 protrudes from the pivot frame 8 diagonally downward in the front direction. An engine hanger 54 is disposed at a leading end of the engine hanger stay 50 (FIG. 9), and supports a rear portion of the crank case 11. The engine hanger stay 50 has a through-hole 51 formed for the bolt 36a (FIG. 7). A nut 52 is put on the back side of the engine hanger stay 50 (FIG. 9), and the bolt 36a is tightened into the nut 52. When the bolts 35a and 36a are tightened into the respective nuts, the tool box 13 including the lid 31 is firmly fixed to the vehicle-body frame.

When the tool box 13 is removed, the positive electrode 60 and the negative electrode 61, disposed in an upper portion of the left side surface 17a of the battery 17, are exposed to the outside. The positive electrode 60 and the negative electrode 61 are disposed on one side of the battery 17 in the vehicle-width direction, and adjacent to each other in the front-and-rear direction. This arrangement of the positive electrode 60 and the negative electrode 61 is obtained by rotating the slide-type battery by 90°. As described above, in the slide-type battery, the positive and negative electrodes are disposed adjacent to each other in the vehicle-width direction. Since the battery 17 has the electrodes arranged in this manner, operations on the electrodes 60 and 61, such as attaching/detaching a terminal 63 with a cable 62 to/from the negative electrode 61, can be performed without drawing the battery 17 out of the battery case 16.

Here, although FIG. 8 illustrates only the cable 62 and the terminal 63 connected to the negative electrode 61, the negative electrode 60 is also connected with a corresponding terminal and cable (not illustrated). Thus, the same operation can be performed on the positive electrode 60 after the cover 64 is removed. In FIG. 8, although the positive electrode 60 covered with the cover 64 cannot be seen in practice, a position on the cover 64 is indicated as the position of the positive electrode 60. In addition, the battery 17 can be inserted into or removed from the battery case 16 after cables are disconnected from the electrodes 60 and 61.

The engine hanger 54 is fixed to the engine hanger stay 50 via an engine hanger bolt 53 (FIG. 9). The engine hanger 54 passes through the crank case 11 in the vehicle-width direction, and is supported between right and left elements of the pair of the engine hanger stay 50. Thus, via the engine hanger 54, the rear portion of the crank case 11 is supported by the vehicle-body frame.

As illustrated in FIG. 9, the rear wall 41 of the battery case 16 is provided with an engagement portion 55 that protrudes rearward. In the engagement portion 55, a semicircular engagement concave portion 56 is formed. The engagement concave portion 56 is opened rearward, and fits onto the engine hanger 54 for locking the battery case 16 on the engine hanger stay 50.

Here, a projection 12a of the cylinder 12 is disposed closer to the front portion of the lid 31. However, the lid 31 is disposed so as not to interfere with the cylinder 12 and the crank case 11. In addition, a lower portion of the cylinder 12 and the crank case 11 are disposed closer to the lower surface of the bottom portion 24 of the electrical component stay 20. However, the bottom portion 24, the front portion 23, the ECU support portion 21, and the battery holding portion 22 of the electrical component stay 20 effectively serve as a heat shield plate, to prevent heat from the engine 10 from adversely affecting components, such as the battery 17 and the ECU 18, which require heat shield.

Next, the attachment of the battery 17, the tool box 13, and the electrical component stay 20 to the battery case 16 will be described. In FIG. 3 in which all components are separated from each other, the ECU support portion 21 and the battery holding portion 22 of the electrical component stay 20 are first placed on the battery case 16, then the battery holding portion 22 is set to the upper opening of the battery case 16, and then the front portion 23 is bent downward at the front edge 22a and placed on the front wall 40 of the battery case 16. Then the bottom portion 24 is bent at the lower edge 23a so that the bottom portion 24 is horizontally placed on the lower surface of the bottom wall 43 of the battery case 16.

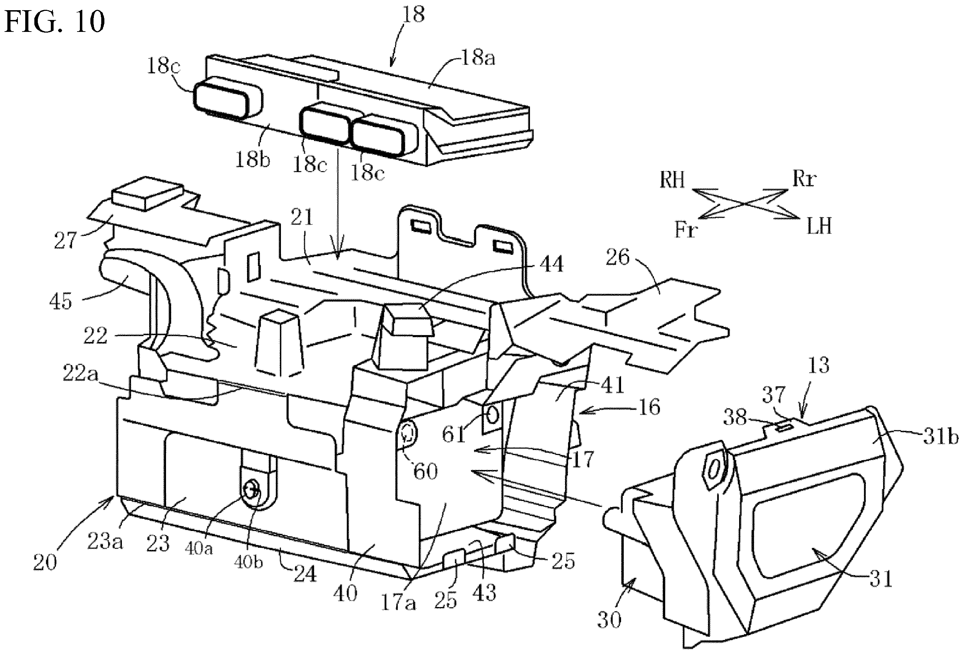

As a result, as illustrated in FIG. 10, the electrical component stay 20 joins with the battery case 16 such that the electrical component stay 20 winds around the upper portion, the front portion, and the bottom portion of the battery case 16. In this time, the front wall 40 of the battery case 16 engages and joins with the front portion 23 of the electrical component stay 20 via the locking projection 40a (see FIG. 2), and the bottom wall 43 of the battery case 16 engages and joins with the bottom portion 24 of the electrical component stay 20 via the locking projections 43a (see FIG. 6). When the battery 17 is pushed from the side opening 16a toward the storage space 16b in this state, the state of FIG. 10 is achieved.

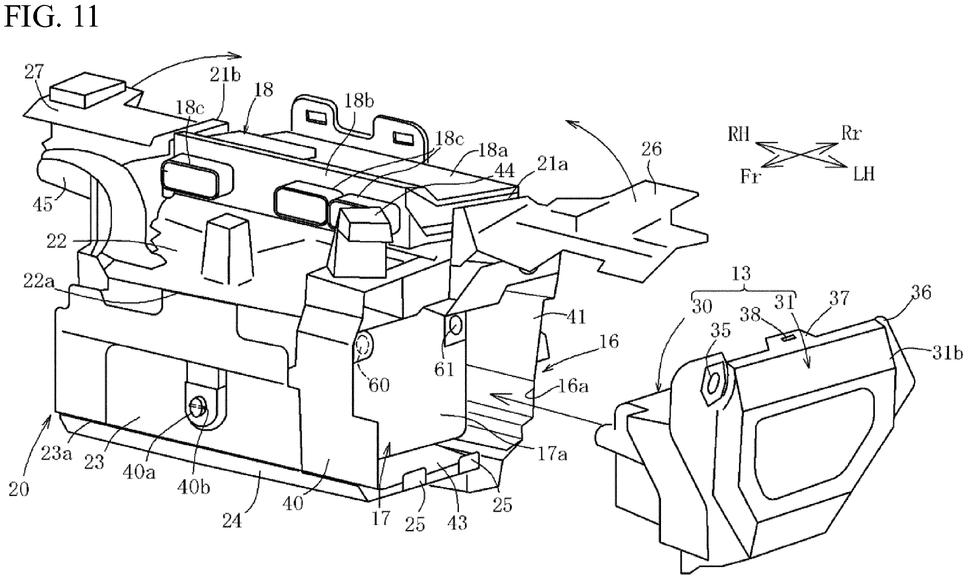

After that, when the ECU 18 is placed on the ECU support portion 21, the state of FIG. 11 is achieved. Then, the left-side holding portion 26 is folded at the left edge 21a so as to be placed on the ECU 18, and the right-side holding portion 27 is folded at the right edge 21b so as to be placed on the ECU 18. Thus, since the leading edges of the left-side holding portion 26 and the right-side holding portion 27 overlap with each other in a state where the left-side holding portion 26 and the right-side holding portion 27 cover the top surface of the body 18a, the left-side holding portion 26 and the right-side holding portion 27 engage and join with each other via the engagement portion 28 (see FIG. 2). As a result, the ECU 18 is fixed on the battery case 16 by the electrical component stay 20, and the state of FIG. 2 is achieved. Since the upper portion and the side portions of the ECU 18 are covered with the left-side holding portion 26 and the right-side holding portion 27, which serve as a heat shield plate, the ECU 18 can be effectively shielded from heat.

Then, the box body 30 of the tool box 13 is pushed from the side opening 16a into the storage space 16b. When the box body 30 is inserted from the side opening 16a into the storage space 16b, the side wall 32 presses the battery 17 in the right direction to fix the battery 17, and the claw 25 engages with the cutout 33a formed in the lower wall 33 of the box body 30 (see FIG. 6). As a result, the battery case 16 housing the battery 17, the electrical component stay 20, and the tool box 13 are joined with each other, and the state of FIG. 12 is achieved.

The battery case 16 of FIG. 12, with which the tool box 13 and the battery 17 are joined, is disposed between the right and left elements of the main frame 7, then the engagement concave portion 56 of the engagement portion 55 of the battery case 16 is fitted onto the engine hanger, then the mounting arms 45 and 44 are respectively fixed to the right and left elements of the main frame 7 via the bolts 45a and 44a, and then the front-side upper portion 35 and the rear-side upper portion 36 of the lid 31 are respectively fixed to the stay 7c and the engine hanger stay 50 via the bolts 35a and 36a. As a result, the state of FIGS. 4 and 6 is achieved.

That is, the battery case 16 is disposed such that the longitudinal direction is equal to the vehicle-width direction, and is supported by the main frame 7 and the engine hanger 54. The battery 17 is inserted into the battery case 16 in the vehicle-width direction, and detachably supported by the battery case 16. The tool box 13 is disposed adjacent to the battery 17; and the box body 30 inserted from the side opening 16a fits in the storage space 16b and presses the battery 17. Thus, the battery 17 is prevented by the tool box 13, from moving toward the side opening 16a (through which the box body 30 is removed) along the vehicle-width direction; and is pressed and fixed in the battery case 16.

Next, effects by the present embodiment will be described. As illustrated in FIGS. 4 and 6, the battery case 16 is disposed such that the longitudinal direction of the battery case 16 is equal to the vehicle-width direction, the side opening 16a is opened toward the left side of the vehicle, only the left side of the battery case 16 is opened, the positive electrode 60 and the negative electrode 61 of the battery 17 face the side opening 16a and is disposed in the front-and-rear direction of the vehicle, the battery 17 can be slid along the vehicle-width direction and removed from the left side of the vehicle, the tool box 13 is disposed adjacent to the battery case 16 and on the left side with respect to the battery case 16, the box body 30 of the tool box 13 is inserted from the side opening 16a into the storage space 16b and protrudes toward the battery 17, and the battery 17 is pressed by the side wall 32. As a result, the battery 17 is prevented by the tool box 13, from moving toward the direction in which the battery 17 is removed.

Thus, even when the main frame 7, disposed above the battery case 16, causes insufficient storage space formed above the battery case 16, the tool box 13 can be disposed in a space formed on the left side with respect to the side opening 16a of the battery case 16. The space is an article storage space that is not limited by the vehicle-body frame. Thus, the tool box 13 can be disposed by effectively using space.

In addition, the capacity of the tool box 13 can be increased because the box body 30 of the tool box 13 fits in the battery case 16, and the stiffness of the tool box 13 can be increased because the tool box 13 is reinforced by the battery case 16. Moreover, since the tool box 13 prevents the battery 17 from moving, the need for the dedicated member (such as a holding band) to hold the battery 17 is eliminated. As a result, the number of components can be reduced.

Moreover, as illustrated in FIG. 7, since the tool box 13 including the lid 31 is directly fixed to the vehicle-body frame via the bolts 35a and 36a, the need for the tool box band used for the above-described slide-type battery case can be eliminated. As a result, the number of components and the weight can be reduced.

Furthermore, as illustrated in FIG. 8, the positive electrode 60 and the negative electrode 61 of the battery 17 are disposed on the left side of the vehicle and adjacent to each other in the front-and-rear direction. This arrangement of the positive electrode 60 and the negative electrode 61 is obtained by rotating the above-described slide-type battery by 90°. Here, the slide-type battery having the positive and negative electrodes disposed adjacent to each other in the vehicle-width direction is housed in a slide-type battery case, and pulled out toward one side of the vehicle for maintenance to prevent short circuit between an electrode of the battery 17 and the vehicle-body frame via a maintenance tool. The slide-type battery case, however, increases the number of components and the weight. Thus, it has been desired to eliminate the need for the slide-type battery case.

In the present embodiment in which the positive electrode and the negative electrode of the battery 17 are disposed on one side of the vehicle and adjacent to each other in the front-and-rear direction, when the side opening 16a of the battery case 16 is opened, cables can be connected to or disconnected from the electrodes 60 and 61 while the battery 17 is housed in the battery case 16. In addition, since the side opening 16a is opened toward one side of the vehicle, it is less likely that a wiring tool contacts the vehicle-body frame. Thus, the need for the slide-type battery case can be eliminated. Since the battery case 16 has no sliding portion, the number of components can be reduced and the battery case 16 can be simplified in structure.

In addition, since the side wall 32 is made of insulating material, metal tools in the tool box 13 can be reliably separated from the electrodes 60 and 61 of the battery 17 so that the metal tools do not contact the electrodes 60 and 61. Thus, the need for the inner lid used for the above-described slide-type battery case can be eliminated. Also in this point, the number of components can be reduced and the battery case can be simplified in structure.

On the battery case 16, the ECU 18 is disposed. The ECU 18 is connected, via a cable, with another component mounted in the vehicle and other than the battery case 16. In the present embodiment, since the battery 17 is attached to or detached from the battery case 16 through the side opening 16a formed on the left side of the battery case 16, the battery 17 can be attached to or detached from the battery case 16, regardless of the ECU 18 disposed on the battery case 16. Thus, since the cable does not have to be disconnected from the ECU 18 every time the battery 17 is attached to or detached from the battery case 16, the attachment and the detachment of the battery 17 can be easily performed in the state where the ECU 18 is disposed on the battery case 16. Here, the ECU 18 is one example of electrical components disposed on the battery case 16, and thus any electrical component may be disposed on the battery case 16 as long as the electrical component is to be connected to another component.

The electrical component stay 20 is fixed to the upper portion of the battery case 16. In addition, the upper portions 21 and 22, the front portion 23, and the bottom portion 24 of the electrical component stay 20 cover the periphery of the battery case 16, and function as a heat shield plate for shielding the battery case 16 from heat. Since the upper portion, the front wall 40, and the bottom wall 43 of the battery case 16 are continuously covered, the battery case 16 can be efficiently shielded from heat. In addition, since the left-side holding portion 26 and the right-side holding portion 27 of the electrical component stay 20 cover the upper surface and the side surfaces of the ECU 18, the ECU 18 can also be shielded from heat by the electrical component stay 20. In particular, in the present embodiment, even when the battery case 16 is disposed closer to the engine 10, the battery case 16 can be effectively shielded from heat from the engine 10 by the electrical component stay 20.

Moreover, since the heat shield portion for the ECU 18 and the heat shield portion for the battery case 16 are formed integrally with each other as the electrical component stay 20, the need for separate heat shield plates can be eliminated. Thus, the number of components can be reduced. Furthermore, since the whole of the electrical component stay 20 can be molded at a time so as to have the unfolded shape illustrated in FIG. 3, the heat shield plate can be easily formed. Furthermore, since the electrical component stay 20 can be bent at proper places so as to have the three-dimensional shape and wound around the battery case 16, the electrical component stay 20 can be easily handled.

The tool box 13 is constituted by the box body 30 and the lid 31, and contains tools. In addition, since the side wall 32 of the box body 30 serves as an abutment portion that abuts against the battery 17, the battery 17 can be held in the battery case 16 by the tool box 13. Thus, the tool box 13 that contains tools can be effectively used, and the number of components can be reduced because the tool box 13 eliminates the need for any battery holding member.

As illustrated in FIG. 9, since the engagement concave portion 56 of the engagement portion 55 of the rear wall 41 of the battery case 16 fits onto the engine hanger 54, the battery case 16 is locked by the engine hanger stay 50. With this configuration, the battery case 16 that houses the heavy battery 17 can be reliably supported. As illustrated in FIG. 7, the tool box 13 is fixed to the engine hanger stay 50 via the bolt 36a.

Thus, since the tool box 13 shares the engine hanger stay 50 that supports the battery case 16 and the engine 10, and causes the engine hanger stay 50 to serve as a member to mount the tool box 13 on the vehicle-body frame, the need for a dedicated mounting stay to mount the tool box 13 on the vehicle-body frame can be eliminated. As a result, the number of components can be reduced.

As illustrated in FIG. 1, when viewed in the side view, the tool box 13 is disposed in the dead space surrounded by the cylinder 12, the main frame 7, the pivot frame 8, and the crank case 11. Thus, the battery 17 (battery case 16) adjacent to the tool box 13 is also disposed in the dead space. Since the battery 17 is effectively disposed in the dead space of the vehicle in this manner, and is not disposed under the seat 15 unlike conventional techniques, components other than the battery 17 can be flexibly disposed under the seat 15. As a result, the components can be effectively arranged.

The above-described embodiment is one example. Since the present invention is not limited to the embodiment, the embodiment may be variously modified or applied within the spirit of the present invention. For example, the saddle-type vehicle to which the present invention is applied may be another vehicle, such as an auto three-wheeler or an auto four-wheeler, as long as the other vehicle has a space that is surrounded by the main frame 7, the pivot frame 8, and the engine 10, and that can be used to dispose the tool box 13 and the battery case 16 (battery 17).

In addition, the direction toward which the battery case 16 is opened may be the right side or the left side of the vehicle. Preferably, the side opening 16a is formed so as to face a road shoulder when the vehicle is parked. In addition, in place of the tool box 13, another storage case that contains articles other than tools may be disposed. Here, the articles contained in the storage case other than the tool box 13 are non-electrical components that are not intended to be connected to other components outside the storage case. In addition, only one of the upper portions 21 and 22, the front portion 23, and the bottom portion 24 may serve as a heat shield plate. However, when the whole of the upper portions 21 and 22, the front portion 23, and the bottom portion 24 serves as a continuously formed heat shield plate, the battery case 16 can be more reliably shielded from heat.

### Reference Signs List

7: main frame
8: pivot frame
10: engine
11: crank case
12: cylinder
13: tool box
15: seat
16: battery case
16a: side opening
17: battery
18: ECU
20: electrical component stay
23: front portion
24: bottom portion
30: box body
31: lid
50: engine hanger stay
54: engine hanger

## Claims

1. A battery support structure for a saddle-type vehicle, comprising:
a vehicle-body frame (1);
an engine (10) supported by the vehicle-body frame (1);
a battery case (16) supported below the vehicle-body frame (1); and
a battery (17) housed in the battery case (16); wherein
the battery case (16) having a side opening (16a) opened toward one direction in a vehicle-width direction,
the battery case (16) being disposed such that a longitudinal direction of the battery case (16) is equal to the vehicle-width direction,
the battery (17) being housed in the battery case (16) such that the battery (17) is detachably attached to the battery case (16) along the vehicle-width direction,
a storage case (13) for containing a non-electrical component is disposed on the side opening (16a) side of the battery case (16) and adjacent to the battery (17), and
the storage case (13) includes a storage case body (30) and a lid (31) and is configured to contain a tool,
**characterized in that**
a side wall (32) of the storage case (13) fits in the side opening (16a) of the battery case (16), and protrudes inward into the battery case (16) from the side opening (16a) to serve as an abutment portion that abuts against the battery (17) such that the battery (17) is prevented from moving toward a direction in which the battery (17) is removed.

2. The battery support structure according to claim 1, wherein
an electrical component (18) is disposed on the battery case (16), and
the electrical component (18) is fixed to an upper portion of the battery case (16) by an electrical component stay (20).

3. The battery support structure according to claim 2, wherein
the electrical component stay (20) includes a heat shield plate (21, 22, 23, 24) extending from portions (21, 22) fixed to the upper portion of the battery case (16), and surrounding a periphery of the battery case (16).

4. The battery support structure according to any one of claims 1 to 3, wherein
the engine (10) is supported by the vehicle-body frame (1) via an engine hanger (54) formed in an engine hanger stay (50) extending from the vehicle-body frame (1), the storage case (13) is fixed to the engine hanger stay (50),
one surface of the battery case (16) in a front-and-rear direction is locked by the engine hanger (54), and
the storage case (13) is fixed to the engine hanger stay (50) and the battery case (16) is locked by the engine hanger (54) with respect to the engine hanger stay (50).

5. The battery support structure according to any one of claims 1 to 4, wherein
the vehicle-body frame (1) includes a main frame (7) disposed above the engine (10) and extending in the front-and-rear direction, and a pivot frame (8) disposed behind the engine (10) and extending in a vertical direction,
the engine (10) includes a crank case (11) and a cylinder (12) protruding upward from an upper portion of the crank case (11), and
when viewed in a side view of the vehicle, the battery case (16) is disposed in a space surrounded by the cylinder (12), the main frame (7), the pivot frame (8), and the crank case (11).

## Patentansprüche

1. Batterieträgerkonstruktion für ein Fahrzeug vom Satteltyp, aufweisend:
einen Fahrzeug-Karosserierahmen (1);
einen Motor (10), der von dem Fahrzeug-Karosserierahmen (1) getragen wird;
ein Batteriegehäuse (16), das unterhalb des Fahrzeug-Karosserierahmens (1) gelagert ist; und
eine Batterie (17), die in dem Batteriegehäuse (16) untergebracht ist; wobei
das Batteriegehäuse (16) eine Seitenöffnung (16a) aufweist, die in eine Richtung in einer Fahrzeugbreitenrichtung geöffnet ist,
wobei das Batteriegehäuse (16) so angeordnet ist, dass eine Längsrichtung des Batteriegehäuses (16) gleich der Fahrzeugbreitenrichtung ist,
die Batterie (17) in dem Batteriegehäuse (16) so aufgenommen ist, dass die Batterie (17) entlang der Fahrzeugbreitenrichtung abnehmbar an dem Batteriegehäuse (16) angebracht ist,
ein Aufbewahrungsgehäuse (13) zur Aufnahme eines nicht-elektrischen Bauteils an der Seite der Seitenöffnung (16a) des Batteriegehäuses (16) und benachbart zu der Batterie (17) angeordnet ist, und
das Aufbewahrungsgehäuse (13) einen Aufbewahrungsgehäuse-Körper (30) und einen Deckel (31) aufweist und zur Aufnahme eines Werkzeugs ausgebildet ist,
**dadurch gekennzeichnet, dass**
eine Seitenwand (32) des Aufbewahrungsgehäuses (13) in die Seitenöffnung (16a) des Batteriegehäuses (16) passt und von der Seitenöffnung (16a) nach innen in das Batteriegehäuse (16) hineinragt, um als ein Widerlagerabschnitt zu dienen, der gegen die Batterie (17) so anstößt, dass die Batterie (17) daran gehindert wird, sich in eine Richtung zu bewegen, in der die Batterie (17) entfernt wird.

2. Batterieträgerkonstruktion nach Anspruch 1, wobei
ein elektrisches Bauteil (18) an dem Batteriegehäuse (16) angeordnet ist, und
das elektrische Bauteil (18) an einem oberen Abschnitt des Batteriegehäuses (16) durch eine elektrische Bauteilstütze (20) befestigt ist.

3. Batterieträgerkonstruktion nach Anspruch 2, wobei
die elektrische Bauteilstütze (20) eine Hitzeschildplatte (21, 22, 23, 24) enthält, die sich von Abschnitten (21, 22), die an dem oberen Abschnitt des Batteriegehäuses (16) befestigt sind, aus erstreckt und einen Umfang des Batteriegehäuses (16) umgibt.

4. Batterieträgerkonstruktion nach einem der Ansprüche 1 bis 3, wobei
der Motor (10) durch den Karosserierahmen (1) über eine Motoraufhängung (54), die in Form einer vom Karosserierahmen (1) ausgehenden Motoraufhängungsstrebe (50) ausgebildet ist, abgestützt ist,
das Speichergehäuse (13) an der Motoraufhängungsstrebe (50) befestigt ist,
eine Oberfläche des Batteriegehäuses (16) in einer vorderen und hinteren Richtung durch die Motoraufhängung (54) verriegelt ist, und
das Aufbewahrungsgehäuse (13) an der Motoraufhängungsstrebe (50) befestigt ist und das Batteriegehäuse (16) über die Motoraufhängung (54) in Bezug auf die Motoraufhängungsstrebe (50) verriegelt ist.

5. Batterieträgerkonstruktion nach einem der Ansprüche 1 bis 4, wobei
der Fahrzeug-Karosserierahmen (1) einen Hauptrahmen (7) aufweist, der oberhalb des Motors (10) angeordnet ist und sich in der vorderen und hinteren Richtung erstreckt, sowie einen Schwenkrahmen (8), der hinter dem Motor (10) angeordnet ist und sich in einer vertikalen Richtung erstreckt,
der Motor (10) ein Kurbelgehäuse (11) und einen von einem oberen Abschnitt des Kurbelgehäuses (11) nach oben ragenden Zylinder (12) aufweist, und
in einer Seitenansicht des Fahrzeugs das Batteriegehäuse (16) in einem Raum angeordnet ist, der von dem Zylinder (12), dem Hauptrahmen (7), dem Schwenkrahmen (8) und dem Kurbelgehäuse (11) umgeben ist.

## Revendications

1. Structure de support de batterie pour un véhicule de type à selle, comprenant :
un châssis de carrosserie de véhicule (1) ;
un moteur (10) supporté par le châssis de carrosserie de véhicule (1) ;
un carter de batterie (16) supporté en dessous du châssis de carrosserie de véhicule (1) ; et
une batterie (17) logée dans le carter de batterie (16) ; dans laquelle
le carter de batterie (16) a une ouverture latérale (16a) ouverte vers une direction dans une direction de largeur de véhicule,
le carter de batterie (16) est disposé de sorte qu'une direction longitudinale du carter de batterie (16) soit égale à la direction de largeur de véhicule,
la batterie (17) est logée dans le carter de batterie (16) de sorte que la batterie (17) soit attachée de manière détachable au carter de batterie (16) suivant la direction de largeur de véhicule,
un carter de stockage (13) destiné à contenir un composant non électrique est disposé sur le côté de l'ouverture latérale (16a) du carter de batterie (16) et adjacent à la batterie (17), et
le carter de stockage (13) comporte un corps de carter de stockage (30) et un couvercle (31) et est configuré pour contenir un outil,
**caractérisée en ce que**
une paroi latérale (32) du carter de stockage (13) s'adapte dans l'ouverture latérale (16a) du carter de batterie (16), et fait saillie vers l'intérieur dans le carter de batterie (16) depuis l'ouverture latérale (16a) pour servir de portion de butée qui bute contre la batterie (17) de sorte que la batterie (17) soit empêchée de se déplacer vers une direction dans laquelle la batterie (17) est retirée.

2. Structure de support de batterie selon la revendication 1, dans laquelle
un composant électrique (18) est disposé sur le carter de batterie (16), et
le composant électrique (18) est fixé à une portion supérieure du carter de batterie (16) par un potelet de composant électrique (20).

3. Structure de support de batterie selon la revendication 2, dans laquelle
le potelet de composant électrique (20) comporte une plaque de bouclier thermique (21, 22, 23, 24) s'étendant depuis des portions (21, 22) fixées à la portion supérieure du carter de batterie (16), et entourant une périphérie du carter de batterie (16).

4. Structure de support de batterie selon l'une quelconque des revendications 1 à 3, dans laquelle
le moteur (10) est supporté par le châssis de carrosserie de véhicule (1) par l'intermédiaire d'un dispositif de suspension de moteur (54) formé dans un potelet de dispositif de suspension de moteur (50) s'étendant depuis le châssis de carrosserie de véhicule (1),
le carter de stockage (13) est fixé au potelet de dispositif de suspension de moteur (50),
une surface du carter de batterie (16) dans une direction avant-arrière est bloquée par le dispositif de suspension de moteur (54), et
le carter de stockage (13) est fixé au potelet de dispositif de suspension de moteur (50) et le carter de batterie (16) est bloqué par le dispositif de suspension de moteur (54) vis-à-vis du potelet de dispositif de suspension de moteur (50).

5. Structure de support de batterie selon l'une quelconque des revendications 1 à 4, dans laquelle
le châssis de carrosserie de véhicule (1) comporte un châssis principal (7) disposé au-dessus du moteur (10) et s'étendant dans la direction avant-arrière, et un châssis de pivot (8) disposé derrière le moteur (10) et s'étendant dans une direction verticale,
le moteur (10) comporte un carter de moteur (11) et un cylindre (12) faisant saillie vers le haut depuis une portion supérieure du carter de moteur (11), et
lorsqu'il est vu en vue latérale du véhicule, le carter de batterie (16) est disposé dans un espace entouré par le cylindre (12), le châssis principal (7), le châssis de pivot (8), et le carter de moteur (11).
